# EUROPÄISCHE PATENTSCHRIFT

(11) **EP 2 546 175 B1**
(45) Veröffentlichungstag und Bekanntmachung des Hinweises auf die Patenterteilung: **14.12.2016**
(21) Anmeldenummer: 11401549.8
(22) Anmeldetag: 13.07.2011
(51) Int. Cl.: B65G 17/08, B65G 17/40, B65G 21/18

(54) **Transportvorrichtung**
Transport device
Dispositif de transport

(43) Veröffentlichungstag der Anmeldung: 16.01.2013
(73) Patentinhaber: FORBO SIEGLING GMBH, 30179 Hannover (DE)
(72) Erfinder: Broe, Peter, 8783 Hornsyld (DK); Alpers, Patrick, 30890 Barsinghausen (DE); Schröter, Rico, 30167 Hannover (DE); Bergmann, Werner, 30659 Hannover (DE); Badenhop, Christian, 29690 Buchholz/ Aller (DE)
(74) Vertreter: Scheffler, Jörg

(56) Entgegenhaltungen:
- EP-A1- 0 704 388
- NL-C2- 1 018 669
- NL-C2- 1 026 601
- US-A- 4 222 483
- US-A- 6 073 756
- US-A1- 2006 006 050
- US-B1- 6 209 716

## Beschreibung

Die Erfindung betrifft eine Transportvorrichtung mit einer Aufnahme, umfassend eine Querführung, und mit einem relativ zu der Aufnahme, beweglich an der Aufnahme angeordneten Transportband, welches zumindest zwei benachbarte Randmodule umfasst, die in Bewegungsrichtung des Transportbands hintereinander angeordnet sind, wobei jedes Randmodul eine Seitenfläche hat, an der ein Führungselement mit einer Anlegefläche zum Anlegen an der aus einer Vielzahl von Rollelementen bestehenden und einen Innenradius einer Kurve aufweisenden Querführung angeordnet ist.

Eine Transportvorrichtung dieser Art besteht aus einem Transportband und einer Aufnahme. Die Aufnahme ist beispielsweise ein Tisch oder Gestell, auf dem das Transportband aufliegt und von dem das Transportband geführt wird. Der mit dem Transportband zusammenwirkende Antrieb ist üblicherweise an der Aufnahme fixiert. Um ein seitliches Ausweichen des Transportbands zu unterbinden, ist an der Aufnahme für das Transportband eine Querführung vorgesehen. Ein Transportband umfassend mehrere Module, die mittels Kupplungsstäben verbunden sind, ist in der Druckschrift DE 32 41 632 C2 beschrieben. Dabei sind zwei Typen von Modulen bekannt. Randmodule mit einer einseitigen Verstärkung, die zur Anordnung in den äußeren Teilen des Bandes eingerichtet sind, und Mittenmodule, die zur Anordnung quer zur Transportrichtung zwischen den Randmodulen vorgesehen sind.

Die Druckschrift EP 0 704 388 A1 offenbart eine gattungsgemäße Transportvorrichtung zum Transport leichter Güter, beispielsweise frischer Pasta. An einem Innenradius liegt das Transportband an rotierenden Bällen an. Die Druckschrift US 4,222,483 A zeigt einen anderen, kurvengängigen Kettenförderer.

Die Druckschrift NL 1 018 669 C2 zeigt ein Transportband, bei dem in den Seitenflächen der Randmodule Kugeln als Lagerkörper eingelassen sind.

Die Druckschrift NL 1 026 601 C2 offenbart eine Transportvorrichtung, bei der das Transportband aus vielen einzelnen, sich über die gesamte Breite des Transportbandes erstreckenden Modulen besteht und die Module an den Seitenflächen Aufnahmen für ein Antriebszahnrad haben. Das Antriebszahnrad hat eine zur Ebene des Transportbandes senkrecht orientierte Drehachse.

Die Druckschriften US 2006/006050 A1 und US 6,073,756 A zeigen Transportbänder, an deren Seiten Führungselemente mit einer Anlegefläche zum Anlegen an einer Querführung angeordnet sind.

Die Richtung, in die das Transportband und somit auch das Transport- oder Fördergut bewegt wird, heißt Förderrichtung. Die Förderrichtung eines solchen Transportbands kann nicht nur entlang einer Geraden orientiert sein, sondern auch einen Radius beschreiben, sodass für das Transportband eine Kurvenfahrt möglich ist. Ein kurvengängiges Transportband ist aus der Druckschrift DE 699 09 662 T2 bekannt. Bei einer Bewegung entlang eines geraden Streckenabschnitts erfolgt die Zugkraftübertragung nahezu gleichmäßig über die gesamte Breite des Transportbands. Wird das Transportband entlang eines gekrümmten Streckenabschnitts geführt, erfolgt die Übertragung der Zugkräfte im Wesentlichen im Bereich der Außenkurve. Die der Innenkurve zugewandten Module, insbesondere die Randmodule, sind dabei lastfrei. Aus dieser Zugkraftverteilung entsteht in der Kurvenfahrt in dem Transportband eine Radialkraft als Kraftkomponente, die in der Ebene des Transportbands zum Mittelpunkt des Krümmungskreises hin orientiert ist. Von der Radialkraft wird das Transportband gegen die Querführung gedrückt. Hierdurch entsteht eine starke Reibung zwischen der Querführung und den Seitenflächen der Randmodule.

Alternativ zu den Querführungen aus Gleitelementen sind Querführungen aus Rollelementen bekannt. Die Rollelemente, insbesondere deren Rotationsachsen, können relativ zu der Aufnahme unbeweglich oder, insbesondere entlang einer Bahn, beweglich ausgeführt sein. Bei Rollelementen, deren Rotationsachsen beweglich sind, werden diese in der Regel mit halber Fördergeschwindigkeit in Förderrichtung bewegt.

Um die Reibungskräfte zu verringern, sind die in den Druckschriften US 6,209,716 B1 und US 2007/0181409 A1 vorgestellten Transportvorrichtungen mit einem Führungselement zum Anliegen an der Querführung ausgeführt. Die Druckschriften zeigen als Führungselement eine an einem Randmodul befestigte Rölleinrichtung. Die Rolleinrichtung dient der Verringerung von Reibung und damit einhergehenden Spannungen, Wärmeeinträgen und Verschleiß des Transportbands. Die Lagerung der Drehachse dieser Rolleneinrichtungen ist jedoch aufgrund des kleinen Rollendurchmessers nicht für hohe Fördergeschwindigkeiten und/oder hohe Radialkräfte geeignet. Zudem haben die Rolleneinrichtungen eine hohe Anzahl kleiner Teile, die leicht verschmutzen, einem hohen Verschleiß unterliegen und kostenintensiv sind.

Als Lösung dieser Probleme sind Querführungen bekannt, die im Bereich einer Innenkurve Rollelemente aufweisen. In der Querführung angeordnet können die Rollelemente gegenüber den Rolleneinrichtungen größere Durchmesser aufweisen und so auch höhere Kräfte abtragen. Es verringern sich weiterhin der Verschleiß und sowohl der Reinigungsaufwand als auch die Wartungsintervalle. Bei dem Zusammenwirken der einzelnen Module des Transportbands mit einer Querführung entstehen Schwingungsanregungen, die den Verschleiß des Transportbands erhöhen, zu Geräuschentwicklung führen und auch das Transportgut zu Vibrationen anregen können.

Der Erfindung liegt die Aufgabe zugrunde, eine Möglichkeit zu schaffen, dass eine Transportvorrichtung gemäß dem Oberbegriff des Anspruchs 1 bei einer Kurvenfahrt zur Übertragung hoher Förderkräfte imstande ist, wobei die Geräuschentwicklung und der Verschleiß des Transportbands, insbesondere der Randmodule, minimiert werden.

Die Aufgabe wird erfindungsgemäß mit einer Transportvorrichtung gemäß den Merkmalen des Anspruchs 1 gelöst. Die weitere Ausgestaltung der Erfindung ist den Unteransprüchen zu entnehmen.

Erfindungsgemäß ist also eine Transportvorrichtung vorgesehen, bei der die Geometrie und/oder Abmessung des Führungselements in Abhängigkeit eines Innenradius der Querführung gewählt ist, indem die einander zugewandten Kanten der Führungselemente benachbarter Randmodule gegenüber den Rotationsachsen der Rollelemente zumindest abschnittsweise geneigt sind, wobei die Fühungselemente die Form einen Raute oder eins Pfeils haben oder eine andere Verzahnungsstruktur mit Nut-und Federelementen aufweisen. Hierdurch ist es möglich, die Schwingungsanregung des Transportbands und somit die Geräuschentwicklung zu minimieren. Bei einer Transportvorrichtung mit mehreren unterschiedlichen Innenradien ist das Führungselement vorzugsweise in Abhängigkeit des kleinsten Innenradius der Transportvorrichtung gewählt. Eine vorteilhafte Ausführung der Transportvorrichtung ist es, dass an dem in Förderrichtung linken Rand des Transportbands Führungselemente einer ersten Form und an dem in Förderrichtung rechten Rand des Transportbands Führungselemente einer zweiten Form angeordnet sind, wobei die Führungselemente der ersten Form von den Führungselementen der zweiten Form abweichend gestaltet sind. Hierdurch ist es möglich, bei einer Transportvorrichtung Links- und Rechtskurven mit sich unterscheidendem, insbesondere kleinstem, Innenradius auszuführen und zugleich Geräuschentwicklung und Verschleiß des Transportbands zu minimieren.

Vorteilhaft ist es, dass die Anlegefläche des Führungselements insbesondere konkav gekrümmt ist. Durch die Krümmung des Führungselements und/oder der Anlegefläche schmiegen sich die Führungselemente an den Innenradius an. Die polygonale Form der Seitenfläche des Transportbands wird somit durch eine abgerundete Form der Führungselemente überdeckt. Dabei entspricht die Krümmung der Führungselemente und/oder der Anlegeflächen dem Innenradius, wodurch eine durchgängige Anlegefläche an der Querführung realisiert ist.

Es ist zwar verbreitet, dass eine Transportvorrichtung eine oder mehrere als Kurvenelement ausgeführte Aufnahmen hat. In der Regel werden jedoch innerhalb einer Transportvorrichtung nur Kurvenelemente mit identischem Krümmungsradius verwendet. Aufgrund seiner spezifischen Eigenschaften hat ein Transportband einen Mindestbandradius, der den kleinsten Innenradius des Kurvenelements bestimmt. Das Kurvenelement kann jedoch einen Innenradius aufweisen, der größer ist als der Mindestbandradius.

Bei einer Transportvorrichtung mit einer Aufnahme, deren Krümmungskreis einen Radius hat, der größer ist als der Mindestbandradius, können sich die unbelasteten Randmodule im Innenradius in Förderrichtung relativ zueinander frei bewegen. Durch die Beweglichkeit können diese Randmodule auch aneinander schlagen und so in das Transportband eine Schwingung einbringen. Daher ist es günstig, dass die Ausdehnung des Führungselements in Förderrichtung derart gewählt ist, dass bei einer Bewegung des Transportbands durch eine als Kurvenelement ausgeführte Aufnahme der Abstand der auf einer dem Mittelpunkt des Krümmungskreises zugewandten Seite des Transportbands angeordneten Führungselemente zweier benachbarter Randmodule zueinander minimiert ist. Vorzugsweise wird der Abstand so weit minimiert, dass die Führungselemente zweier benachbarter Randmodule aneinander anliegen. Dabei ist die Ausdehnung die maximale Länge, Spannweite oder Erstreckung des Führungselements in Förderrichtung. Hierdurch ist es einerseits möglich, dass die Führungselemente in der Kurvenfahrt eine nahezu unterbrechungsfreie, durchgängige Anlegefläche ausbilden. Andererseits wird durch das gegenseitige Berühren der Führungselemente zweier benachbarter Randmodule eine Relativbewegung der Randmodule in Förderrichtung unterbunden, wodurch die Geräuschentwicklung und der Verschleiß der Module minimiert werden. Des Weiteren sind die benachbarten Module innerhalb der Kurvenfahrt stets äquidistant, weisen also den selben, unveränderlichen Abstand auf.

Eine Weiterbildung der Erfindung ist es, dass die Führungselemente insbesondere in Längsrichtung des Transportbands und/oder in Förderrichtung derart dimensioniert sind, dass sich einander zugewandte Kanten der Führungselemente benachbarter Randmodule bei einer Kurvenfahrt des Transportbands berühren. Durch die Berührung bilden die Führungsmodule bei einer Kurvenfahrt des Transportbands eine an der Querführung anliegende, unterbrechungsfreie, durchgängige Anlegefläche aus. So sind benachbarte Module des Transportbands, insbesondere die Randmodule innerhalb der Kurvenfahrt, stets äquidistant, weisen also denselben, unveränderlichen Abstand auf.

Vorteilhaft ist eine Transportvorrichtung, bei der die Querführung aus einer Vielzahl von Rollelementen besteht. Durch eine rollende Abstützung quer zur Förderichtung ist es insbesondere gegenüber einer Gleitführung möglich, die radial auftretende Kraft bei höheren Fördergeschwindigkeiten und geringerer Temperaturentwicklung am Innenradius aufzunehmen und dabei zugleich die Belastung der Module zu reduzieren, den Energiebedarf des Antriebs zu senken und den Verschleiß der Transportvorrichtung zu minimieren. Die Rollelemente sind als Walzen oder Kugeln ausgeführt, wobei die Rotationsachse vorzugsweise senkrecht zur Oberfläche des Transportbands orientiert ist. Als günstig hat sich eine Ausführungsform erwiesen, bei der die Rollelemente in Förderrichtung nebeneinander angeordnet sind.

Bei einer Querführung mit Rollelementen ist es günstig, dass die Erstreckung, also die Spannweite, die Ausdehnung oder die Länge der Anlegefläche des Führungselements in Förderrichtung zumindest dem Abstand der Rotationsachsen zweier benachbarter Rollelemente in Förderrichtung entspricht. Eine derartige Erstreckung der Anlegefläche stellt sicher, dass bei einer Kurvenfahrt das Führungselement stets gleichzeitig an zumindest zwei benachbarten Rollelementen anliegt. Jedes einzelne Randmodul wird immer zugleich von zwei Rollelementen geführt, sodass die Absätze zwischen benachbarten Randmodulen minimiert werden und somit die Schwingungsanregung des Transportbands reduziert wird. Dies hat zur Folge, dass die mechanische Belastung der Transportvorrichtung verringert wird und außerdem die Geräuschentwicklung in der Kurvenfahrt gegenüber dem Stand der Technik herabgesetzt ist.

Eine Weiterbildung der Erfindung betrifft ein Führungselement, das im Bereich der Projektion der Seitenfläche des Randmoduls auf die Querführung an der Querführung anliegt und zugleich auch im Bereich der Projektion der Seitenfläche zumindest eines benachbarten Randmoduls auf die Querführung an dieser anliegt. Zwei benachbarte Randmodule stützen sich also gemeinsam an einem Führungselement ab. Hierdurch ist es möglich, die Schwingungsanregung zu reduzieren, da sich so in der Kurvenfahrt ein nahezu tangentialer Linienkontakt aller Führungselemente an der Querführung ergibt. Die Randmodule haben stets denselben Abstand zum Mittelpunkt der Krümmungskurve Eine Relativbewegung der benachbarten Randmodule, insbesondere quer zur Förderrichtung, wird unterbunden.

Damit das Führungselement bei einer Kurvenfahrt an mehreren Rollelementen und/oder an mehreren Randmodulen anliegen kann, hat es sich besonders bewährt, dass das Führungselement quer zur Förderrichtung eine asymmetrische Geometrie, beispielsweise die Form eines Puzzleteils, hat. Günstig ist es, dass die Rotationsachsen der Rollelemente parallel zu der Ebene der Anlegefläche orientiert sind. Hierdurch ist eine gleichmäßige Kraftübertragung bei geringem Verschleiß gewährleistet. Erfindungsgemäß sind die Kanten der Führungselemente gegenüber den Rotationsachsen der Rollelemente zumindest abschnittsweise geneizt. Als besonders dienlich hat sich erwiesen, dass die Neigung zwischen 30° und 60°, vorzugsweise 45°, beträgt.

Eine Ausführungsvariante der Transportvorrichtung hat ein an einem Randmodul befestigtes Führungselement, welches eine Innenseite hat, wobei die Innenseite an dem Randmodul anliegt und bei einer Kurvenfahrt des Transportbands auch an zumindest einem benachbarten Randmodul anliegt. Hierdurch ist es möglich, dass sich benachbarte Randmodule an deren Führungselementen abstützen. So wird die Bewegungsfreiheit der Randmodule relativ zueinander, insbesondere quer zur Förderrichtung begrenzt und es werden die Randmodule gleichmäßig zu dem Mittelpunkt der Krümmungskurve beziehungsweise zu den Rotationsachsen der Rollelemente ausgerichtet. Dadurch werden Schwingungsanregung und Geräuschentwicklung reduziert.

Es hat sich als besonders geeignet erwiesen, dass das Führungselement lösbar und/oder auswechselbar an dem Randmodul angeordnet ist. Hierdurch ist es möglich, ein Transportband mit Führungselementen auszustatten, die auf den jeweiligen Anwendungsfall hin ausgewählt worden sind. Bei einer Transportvorrichtung werden in der Regel nur Kurvenabschnitte mit identischem Krümmungsradius vorgesehen. Dieser Krümmungsradius entspricht jedoch häufig nicht dem kleinsten möglichen Krümmungsradius, der mit dem Transportband zu realisieren ist. Um die damit verbundenen Probleme zu kompensieren, ist das erfindungsgemäße Führungselement vorgesehen. Ist das Führungselement nun austauschbar, reicht es aus, bei der Konfektionierung des Transportbands die Führungselemente an der Seitenfläche der Randmodule zu positionieren, die auf den kleinsten Innenradius der Transportvorrichtung abgestimmt sind. Alternativ ist es natürlich möglich, das Führungselement dauerhaft an dem Raridmodul zu befestigen, beispielsweise kann ein Randmodul mit einem Führungselement hergestellt werden. Dabei wird das Führungselement im Bereich der Seitenfläche des Randmoduls während oder nach der Herstellung des Randmoduls an dieses angeformt, angespritzt und/oder angeklebt.

Das Führungselement umfasst einen plattenartigen Körper und ein Verbindungsmittel, welches an dem Körper festgelegt ist. Vorzugsweise ist das Verbindungsmittel des Führungselements als Steckelement.ausgeführt. So ist eine schnelle und fehlerfreie Montage möglich. Das Verbindungsmittel ist zur Anordnung in einer Ausnehmung des Randmoduls vorgesehen. Vorzugsweise ist die Ausnehmung in der Seitenfläche des Randmodul angeordnet.

Weiterhin ist es von Vorteil, dass das Führungselement an dem Randmodul verdrehsicher gelagert ist. Durch die Unterdrückung einer Verdrehung des Führungselements wird die Wirkung der Erstreckung und/oder Krümmung des Führungselements verbessert. Die Verdrehsicherung kann auf unterschiedliche Weise realisiert werden. Eine Möglichkeit ist ein Sicherungsbolzen, der Bestandteil des Führungselements und/oder des Randmoduls ist und der in eine Aufnahme in dem Randmodul und/oder dem Führungselement eingreift. Eine andere Möglichkeit der Verdrehsicherung besteht aus einem Verbindungsmittel des Führungselements und einer Ausnehmung, die zueinander eine korrespondierende, vorzugsweise ovale Querschnittsgeometrie aufweisen. Letzteres kann beispielsweise dadurch realisiert sein, dass die Ausnehmung einen ovalen Querschnitt und das Verbindungsmittel des Führungselements eine ovale Basis aufweist. Im Gebrauchszustand greift das Verbindungsmittel in die Ausnehmung ein und die Basis liegt an der Wand der Ausnehmung an. Vorzugsweise sind Ausnehmung und Verbindungsmittel so orientiert, dass der große Durchmesser des Querschnitts parallel zur Förderrichtung ausgerichtet ist.

Es ist günstig, dass das Verbindungsmittel zur lösbaren Befestigung des Führungselements an dem Randmodul eine Federklemme ist und/oder umfasst. Mittels einer Federklemme, auch Clipsverbindung oder Federhaken genannt, kann das Führungselement schnell montiert werden, was die Konfektionierung des Transportbands erleichtert. Durch die Federklemme ist das Führungselement während der üblichen Beanspruchungen des Transportbands vor einem ungewollten Lösen und Verlieren gesichert. Weiterhin ist bei einer Federklemme, wenn gewollt, eine Demontage möglich.

Vorzugsweise ist das Verbindungsmittel, insbesondere mit Basis und Federhaken, einteilig hergestellt. Günstig ist es, dass das Verbindungsmittel mit dem Führungselement einteilig hergestellt ist.

Es hat sich für einen möglichst flexiblen Einsatz gerade auch für die Nachrüstung bestehender Transportbänder als günstig erwiesen, dass das Führungselement in einer insbesondere der äußersten der Querführung zugewandten Öse des Randmoduls angeordnet ist. Die Öse bei derartigen Randmodulen hat üblicherweise die Funktion, den Kupplungsstab, der zwei in Förderrichtung benachbarte Module zusammenhält, aufzunehmen. Bei bestimmten Ausführungsvarianten der Transportbänder greift in die letzte Öse kein Kupplungsstab ein. Die Öse dient dann bei der Montage des Transportbands lediglich als eine Durchlassöffnung für den Kupplungsstab. Das in der Öse angeordnete Verbindungsmittel kann in beiden Fällen als Verliersicherung des Kupplungsstabs dienen. Dazu wird der Öffnungsquerschnitt durch das Verbindungsmittel stark reduziert. Günstig ist es, dass das Führungselement eine Durchbrechung aufweist, welche insbesondere im Wesentlichen orthogonal zu der Anlegefläche orientiert ist. Durch die Durchbrechung ist es möglich, dass sowohl Verschmutzungen nicht so leicht im Bereich des Führungselements anhaften beziehungsweise dass das Transportband leicht gereinigt werden kann. Die Durchbrechung ist mittig in dem Führungselement angeordnet. In einer Ausführung wird die Durchbrechung im Führungselement zu zwei Seiten von jeweils einem Federhaken des Verbindungsmittels eingefasst.

Die Erfindung lässt verschiedene Ausführungsformen zu. Zur weiteren Verdeutlichung ihres Grundprinzips sind einige davon in der Zeichnung dargestellt und werden nachfolgend beschrieben. Diese zeigt in
- Fig. 1: eine schematische Draufsicht auf eine Transportvorrichtung;
- Fig. 2: eine schematische Darstellung eines Tramsportbands;
- Fig. 3: eine schematische Darstellung eines Randmoduls des in Figur 2 dargestellten Transportbands;
- Fig. 4: eine schematische Darstellung eines Randmoduls des in Figur 2 dargestellten Transportbands;
- Fig. 5: eine schematische Darstellung eines Randmodul des in Figur 2 dargestellten Transportbands;
- Fig. 6: eine schematische Darstellung einer ersten Ausführungsform des Führungselements;
- Fig. 7: eine schematische Darstellung einer zweiten und dritten Ausführungsform des Führungselements;
- Fig. 8: eine schematische Darstellung einer vierten Ausführungsform des Führungselements;
- Fig. 9: eine schematische Darstellung einer Ausführungsform des Verbindungsmittels;
- Fig. 10: eine schematische Darstellung einer anderen Ausführungsform des Verbindungsmittels;
- Fig. 11: eine schematische Darstellung eines Randmoduls.

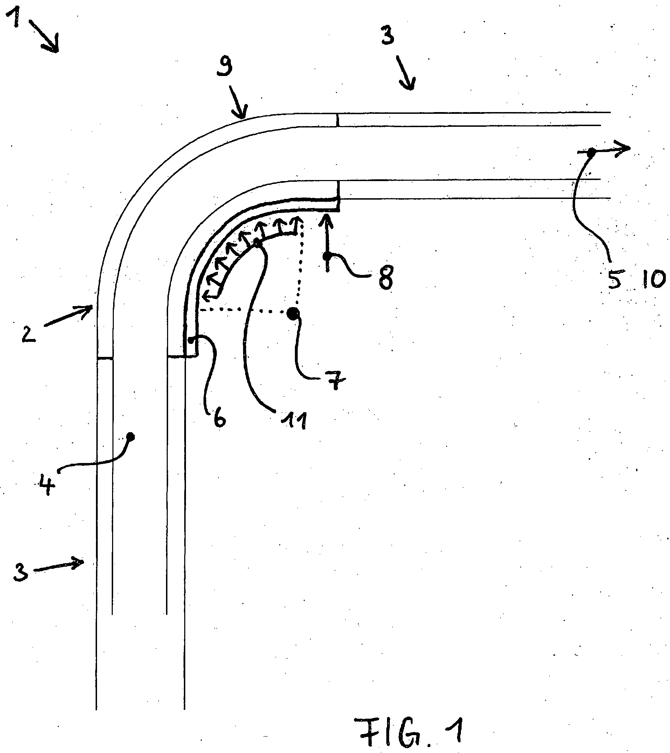

Figur 1 zeigt eine Transportvorrichtung 1. Die Transportvorrichtung 1 umfasst mehrere Aufnahmen 2, 3, an denen ein Transportband 4 beweglich angeordnet ist. Die Förderrichtung 5 ist die Bewegungsrichtung des Transportbands 4. Zumindest die als Kurvenelement ausgeführte Aufnahme 2 der Transportvorrichtung 1 hat eine Querführung 6. Die Aufnahme 2 ist entlang einer Kreisbahn um einen Mittelpunkt 7 gekrümmt und hat einen Innenradius 8 und einen Außenradius 9. Zur Bewegung des Transportbands 4 wird mittels eines hier nicht dargestellten Antriebs auf das Transportband 4 eine Zugkraft 10 übertragen. Aus der Zugkraft 10 entstehen bei der Umlenkung des Transportbands 4 Radialkräfte 11, die auf die Querführung 6 wirken und von dieser aufgenommen werden. In der Figur sind Förderrichtung 5 und Zugkraft 10 in nur eine Richtung dargestellt. Es ist mit dem erfindungsgemäßen Band jedoch jederzeit möglich, die Förderrichtung 5 umzukehren, wobei dann auch die Zugkraft 10 in die entgegengesetzte Richtung wirkt.

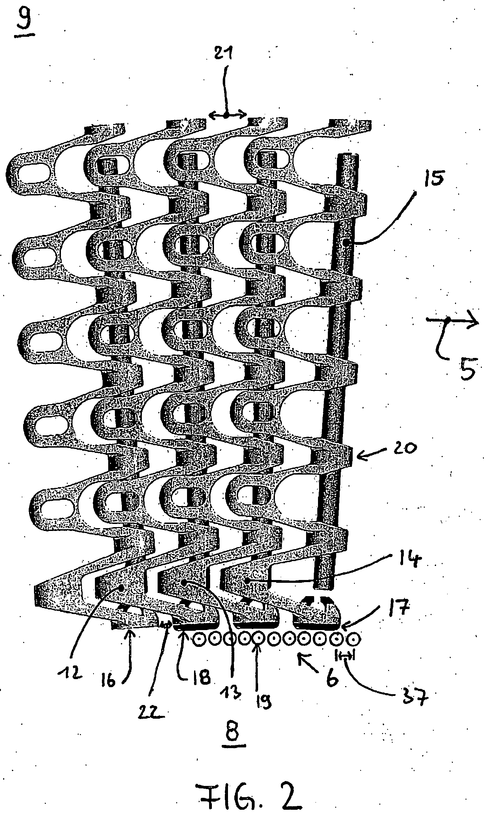

Figur 2 zeigt eine schematische Darstellung eines Ausschnitts eines Transportbands 4. Das Transportband 4 umfasst mehrere, in Förderrichtung 5 hintereinander angeordnete Randmodule 12, 13, 14. Die Randmodule 12, 13, 14 sind mittels eines Kupplungsstabs 15 verbunden. Jedes der Randmodule 12, 13, 14 hat eine Seitenfläche 16. An den Seitenflächen 16 des Innenradius 8 sind Führungselemente 17 angeordnet. Jedes Führungselement 17 hat eine Anlegefläche 18 zum Anlegen an der Querführung 6. Die Querführung 6 besteht aus einer Vielzahl an Rollelementen 19. Das Transportband 4 ist in einer Kurvenfahrt dargestellt. Dabei liegt jede Anlegefläche 18 an zumindest zwei Rollelementen 19 an. Die Rotationsachsen der Rollelemente 19 haben einen Abstand 37 zueinander. Die Kupplungsstäbe 15 sind in Ösen 20 der Randmodule 12, 13, 14 gelagert. Bei einer Kurvenfahrt ist der Abstand 21 der Ösen 20 zweier benachbarter Randmodule 12, 13am Außenradius 9 größer als der Abstand 22 am Innenradius 8.

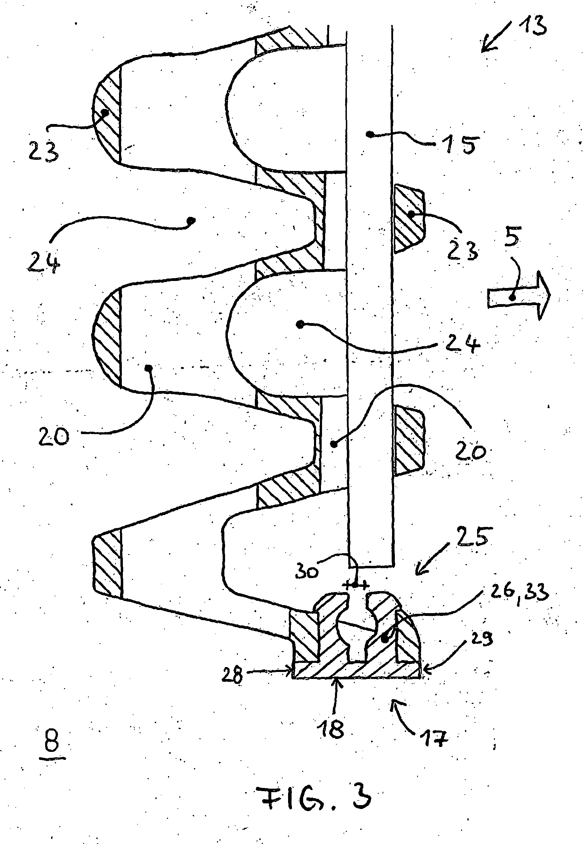

Die Figuren 3, 4 und 5 zeigen ein Randmodul 13 des in den Figuren 1 und 2 dargestellten Transportbands 4 mit unterschiedlichen Führungselementen 17. Das Randmodul 13 besteht wechselseitig aus Erhebungen 23 und Senken 24, in die die Erhebungen der benachbarten Randmodule 12, 14 eingreifen. Die Erhebungen 23 weisen quer zur Förderrichtung Ösen 20 genannte Durchbrechungen auf. Die Erhebungen 23 und die Senken 24 sind in Förderrichtung 5 orientiert. In den Ösen 20 ist der Kupplungsstab 15 zum Verbinden benachbarter Randmodule 12, 13, 14 gelagert. Die Öse 20, die dem Innenradius 8 am nächsten ist, dient als Ausnehmung 25 des Randmoduls 13 zur Aufnahme eines Verbindungsmittels 26 des Führungselements 17. Das Verbindungsmittel 26 ist als eine Clipsverbindung mit Federhaken 33 ausgeführt. Das Verbindungsmittel 26 dient darüber hinaus der Sicherung des Kupplungsstabs 15. Um ein Verhaken des Kupplungsstabs 15 an den Federhaken 33 zu unterbinden, sind die Größe des Freiraums 30 zwischen den Federhaken 33, die Lage des Freiraums 30 relativ zu der Öse 20 in Förderrichtung 5 und der Durchmesser des Kupplungsstabs 15 derart aufeinander abgestimmt, dass ein Eindringen des Kupplungsstabs 15 in den Freiraum 30 unterbunden ist. Die dargestellte Förderrichtung 5 ist nur exemplarisch. Das Transportband 4 kann bei gleicher Funktionalität auch in entgegengesetzter Richtung bewegt werden.

Figur 3 zeigt eine geschnittene schematische Darstellung eines in Figur 2 gezeigten Randmoduls 13 mit einem Führungselement 17. Das Führungselement 17 hat eine in Förderrichtung 5 weisende vordere Kante 29 und eine dieser vorderen Kante 29 gegenüberliegende hintere Kante 28. Die Anlegefläche 18 dient zur Anlage an der in den Figuren 1 und 2 dargestellten Querführung 6.

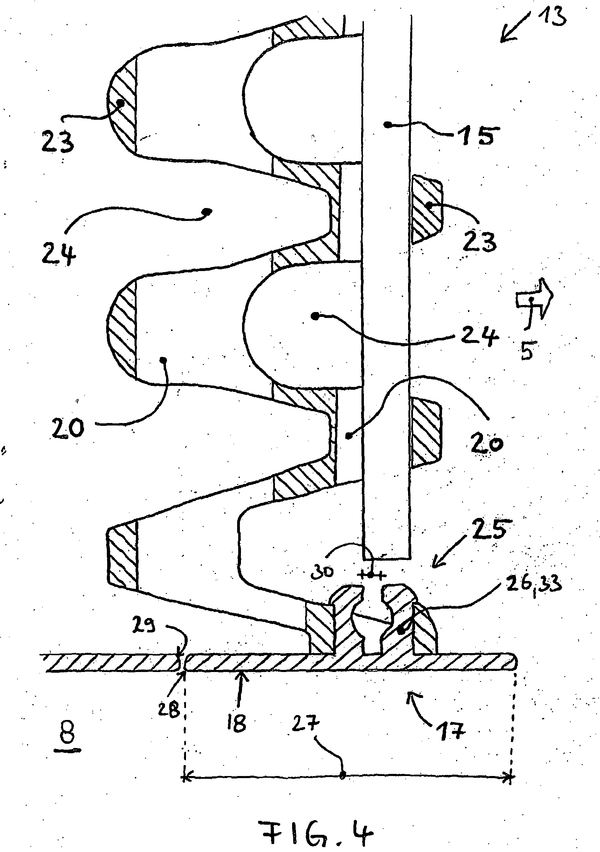

Figur 4 zeigt eine geschnittene schematische Darstellung eines in Figur 2 gezeigten Randmoduls 13 mit einem Führungselement 17. Die Erstreckung 27 des Führungselements 17 ist so gewählt, dass bei einer Kurvenfahrt eine Kante 28 des Führungselements 17 an einer Kante 29 eines in Figur 2 gezeigten benachbarten Randmoduls 12, 14 anliegt. Zugleich hat das Führungselement 17 eine gegenüber der in Figur 3 gezeigten Ausführung verlängerte Anlegefläche 18.

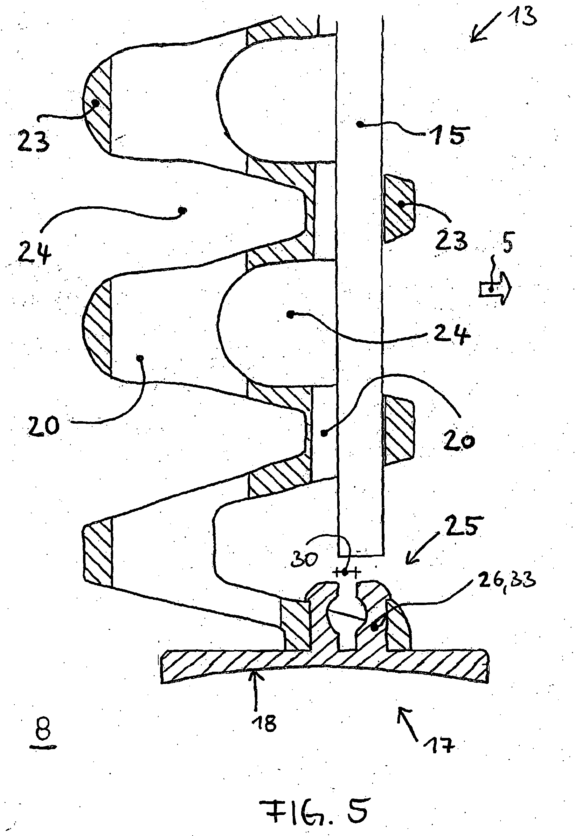

Figur 5 zeigt eine geschnittene schematische Darstellung eines in Figur 2 gezeigten Randmoduls 13 mit einem Führungselement 17. Das Führungselement 17 hat eine Anlegefläche 18, die konkav, entsprechend dem Innenradius 8 der in den Figuren 1 und 2 gezeigten Querführung 6 gekrümmt ist.

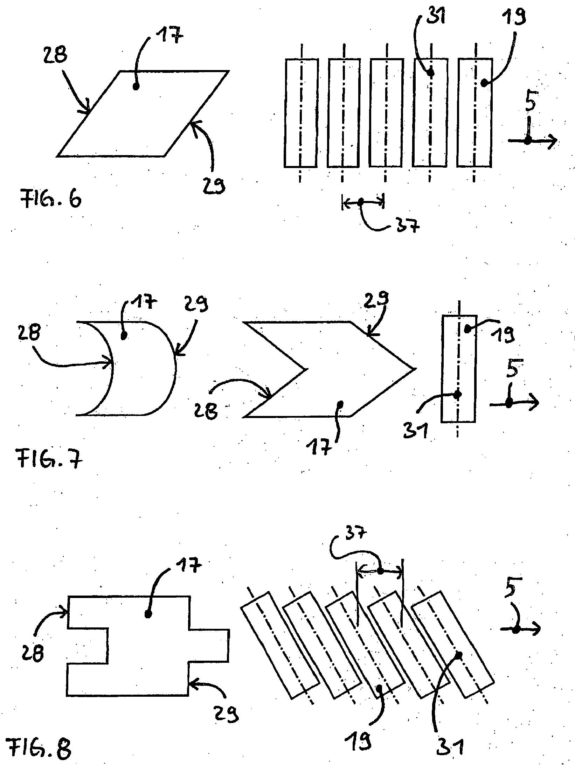

Die Figuren 6, 7 und 8 zeigen schematische Darstellungen unterschiedlicher Formen des Führungselements 17. Dargestellt sind weiterhin Rollelemente 19 der in den Figuren 1 und 2 gezeigten Querführung 6 mit ihren Rotationsachsen 31. Die Rotationsachsen 31 benachbarter Rollelemente 19 haben einen Abstand 37. Die Führungselemente 17 haben Kanten 28, 29. Diese Kanten 28, 29 haben vorzugsweise eine Orientierung, die von der Orientierung der Rotationsachsen 31 abweicht. Das in Figur 6 dargestellte Führungselement 17 hat dazu die Form einer Raute. Die beispielhaft dargestellten Führungselemente 17 der Figur 7 zeigen weitere Formen, wobei die Aufzählung nicht abschließend ist. Dabei sind die Kanten 28, 29 des Führungselements 17 gegenüber der Förderrichtung 5 und/oder den Rotationsachsen 31 geneigt.

Figur 8 zeigt ein puzzleförmiges Führungselement 17, welches zum Anlegen an Rollelemente 19 mit beispielsweise geneigter oder gerader Rotationsachse 31 ausgeführt ist.

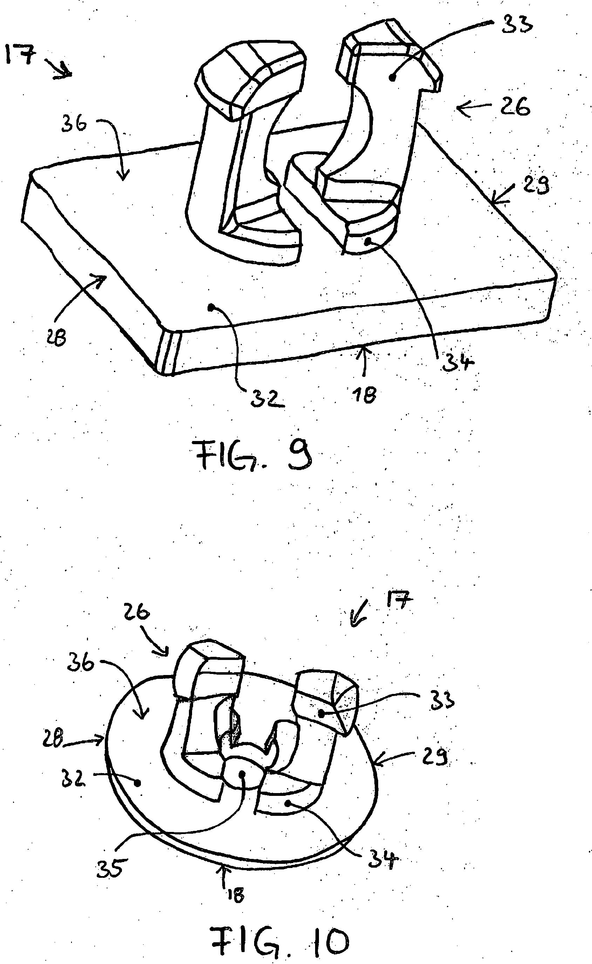

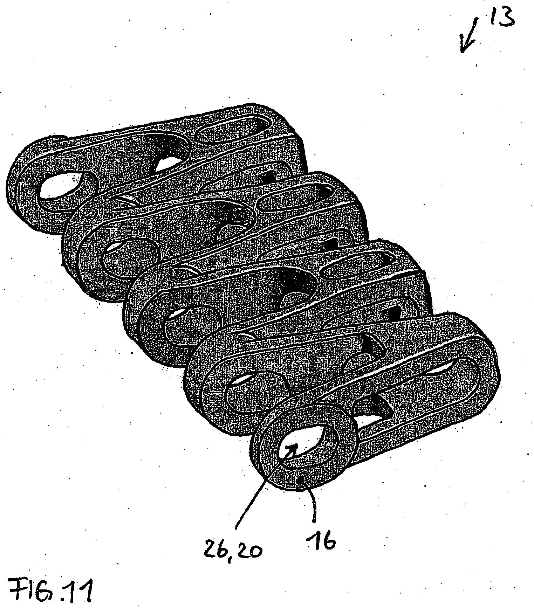

Die Figuren 9 und 10 zeigen schematische Darstellungen eines Verbindungsmittels eines Führungselements 17 in räumlichen Ansichten. Das Führungselement 17 besteht aus einem plattenförmigen Körper 32 und einem Verbindungsmittel 26. Das Führungselement 17 hat Kanten 28, 29, eine Anlegefläche 18 und eine einer Seitenfläche eines Randmoduls 12, 13, 14 zugeordnete Innenseite 36. Das Verbindungsmittel 26 umfasst in der gezeigten Ausführungsform zwei Federhaken 33 und eine Basis 34. Die Basis 34 hat die Form einer ovalen Scheibe, die im Bereich des kurzen Durchmessers unterbrochen ist. Die Basis 34 ist in der Verwendungsstellung in der in Figur 11 gezeigten Ausnehmung 25 des Randmoduls angeordnet. Durch die gestreckte, ovale Ausführung der Basis 34 und der Ausnehmung 25 ist die Orientierung des Führungselements 17 vorgegeben und das Führungselement 17 verdrehsicher gelagert. Auch andere geometrische Formen können zum Erlangen einer Verdrehsicherung geeignet sein, zum Beispiel Rechteck, Kreissegment, Raute, Trapez, Ellipse, Polygon oder eine Kombination mehrerer geometrischer Grundformen wie zwei ineinander verschnittene Kreise.

Das in Figur 10 dargestellte Führungselement 17 unterscheidet sich von dem Führungselement 17 aus Figur 9 durch eine zentral im Führungselement 17 positionierte Durchbrechung 35. Die Durchbrechung 35 ist im Wesentlichen orthogonal zu der Anlegefläche 18 orientiert. Die Durchbrechung 35 ist mittig in dem Führungselement 17 angeordnet und wird zu zwei Seiten von jeweils einem Federhaken 33 des Verbindungsmittels 26 eingefasst.

Figur 11 zeigt eine schematische Darstellung einer räumlichen Ansicht eines Randmoduls 13 des in Figur 2 gezeigten Transportbands 4. Das Randmodul 13 hat eine Seitenfläche 16, die der in den Figuren 1 und 2 dargestellten Querführung 6 zugeordnet ist. In der Seitenfläche 16 ist eine Ausnehmung 25 zur Aufnahme des in den Figuren 9 und 10 gezeigten Verbindungsmittels 26 des Führungselements 17 vorgesehen. Die Ausnehmung 25 hat eine ovale Querschnittsgeometrie und dient zugleich als Öse 20 zur Durchführung des in den Figuren 3 bis 5 dargestellten Kupplungsstabs 15 bei der Konfektionierung des Transportbands 4.

## Patentansprüche

1. Transportvorrichtung (1) mit einer Aufnahme (2, 3), umfassend eine Querführung (6), und mit einem relativ zu der Aufnahme (2, 3) beweglich an der Aufnahme (2, 3) angeordneten Transportband (4), welches zumindest zwei benachbarte Randmodule (12, 13, 14) umfasst, die in Förderrichtung (5) des Transportbandes (4) hintereinander angeordnet sind, wobei jedes Randmodul (12, 13, 14) eine Seitenfläche (16) hat, an der ein Führungselement (17) mit einer Anlegefläche (18) zum Anlegen an der aus einer Vielzahl von Rollelementen (19) bestehenden und einen Innenradius (8) einer Kurve aufweisenden Querführung (6) angeordnet ist, **dadurch gekennzeichnet, dass** die Geometrie und/oder Abmessung des Führungselementes (17) in Abhängigkeit des Innenradius (8) der Querführung (6) gewählt ist, indem die einander zugewandten Kanten (28, 29) der Führungselemente (17) benachbarter Randmodule (12, 13, 14) gegenüber den Rotationsachsen (31) der Rollelemente (19) zumindest abschnittsweise geneigt sind, wobei die Führungselemente (17) die Form einer Raute, eines Pfeils oder eines Bogens haben oder an ihren Kanten (28, 29) eine andere Verzahnungsstruktur mit Nut- und Federelementen aufweisen.

2. Transportvorrichtung (1) nach Anspruch 1, **dadurch gekennzeichnet, dass** die Anlegefläche (18) gekrümmt ist.

3. Transportvorrichtung (1) nach den Ansprüchen 1 oder 2, **dadurch gekennzeichnet, dass** die Erstreckung (27) des Führungselementes (17) in Förderrichtung (5) derart gewählt ist, dass bei einer Kurvenfahrt des Transportbandes (4) insbesondere an dem Innenradius (8) der Abstand (22) zweier benachbarter Randmodule (12, 13, 14) minimiert ist.

4. Transportvorrichtung (1) nach zumindest einem der vorhergehenden Ansprüche, **dadurch gekennzeichnet, dass** das Führungselement (17) eines Randmoduls (13) derart dimensioniert ist, dass sich einander zugewandte Kanten (28, 29) der Führungselemente (17) benachbarter Randmodule (12, 14) bei einer Kurvenfahrt des Transportbandes (4) berühren.

5. Transportvorrichtung (1) nach zumindest einem der vorhergehenden Ansprüche, **dadurch gekennzeichnet, dass** die Erstreckung (27) der Anlegefläche (18) in Förderrichtung (5) zumindest dem einfachen Abstand (37) der Rotationsachsen (31) zweier benachbarter Rollelemente (19) in Förderrichtung (5) entspricht.

6. Transportvorrichtung (1) nach zumindest einem der vorhergehenden Ansprüche, **dadurch gekennzeichnet, dass** das Führungselement (17) eine an dem Randmodul (13) anliegende Innenseite (36) hat, die in einer Kurvenfahrt des Transportbandes (4) auch an zumindest einem benachbarten Randmodul (12, 14) anliegt.

7. Transportvorrichtung (1) nach zumindest einem der vorhergehenden Ansprüche, **dadurch gekennzeichnet, dass** das Führungselement (17) lösbar an dem Randmodul (12, 13, 14) angeordnet ist.

8. Transportvorrichtung (1) nach zumindest einem der vorhergehenden Ansprüche, **dadurch gekennzeichnet, dass** das Führungselement (17) ein Verbindungsmittel (26) hat.

9. Transportvorrichtung (1) nach Anspruch 8, **dadurch gekennzeichnet, dass** in dem Randmodul (12, 13, 14) eine Ausnehmung (25) zur Aufnahme des Verbindungsmittels (26) vorhanden ist.

10. Transportvorrichtung (1) nach zumindest einem der vorhergehenden Ansprüche, **dadurch gekennzeichnet, dass** das Führungselement (17) an dem Randmodul (12, 13, 14) verdrehsicher gelagert ist.

11. Transportvorrichtung (1) nach zumindest einem der Ansprüche 8 bis 10, **dadurch gekennzeichnet, dass** das Verbindungsmittel (26) einen Federhaken (33) umfasst.

12. Transportvorrichtung (1) nach zumindest einem der vorhergehenden Ansprüche, **dadurch gekennzeichnet, dass** das Führungselement (17) in einer Öse (20) des Randmoduls (12, 13, 14) angeordnet ist.

13. Transportvorrichtung (1) nach zumindest einem der vorhergehenden Ansprüche, **dadurch gekennzeichnet, dass** das Führungselement (17) eine Durchbrechung (35) aufweist, welche insbesondere im Wesentlichen orthogonal zu der Anlegefläche (18) orientiert ist.

## Claims

1. Transporting apparatus (1) having a holder (2, 3), comprising a transverse guide (6), and having a transporting belt (4), which is arranged on the holder (2, 3) for movement relative to the holder (2, 3) and comprises at least two adjacent periphery modules (12, 13, 14), which are arranged one behind the other in the conveying direction (5) of the transporting belt (4), wherein each periphery module (12, 13, 14) has a side surface (16), on which is arranged a guide element (17) with a positioning surface (18) for positioning on the transverse guide (6), which comprises a multiplicity of rolling elements (19) and has an inner radius (8) of a curve, **characterized in that** the geometry and/or dimensioning of the guide element (17) are/is selected in dependence on the inner radius (8) of the transverse guide (6), the mutually facing edges (28, 29) of the guide elements (17) of adjacent periphery modules (12, 13, 14) being at least partially inclined in relation to the axes of rotation (31) of the rolling elements (19), wherein the guide elements (17) are in the form of a diamond, of an arrow or of an arc or, on their edges (28, 29), have different toothing structures with groove and tongue elements.

2. Transporting apparatus (1) according to Claim 1, **characterized in that** the positioning surface (18) is curved.

3. Transporting apparatus (1) according to Claim 1 or 2, **characterized in that** the extent (27) of the guide element (17) in the conveying direction (5) is selected such that, when the transporting belt (4) is travelling along a curve, in particular along the inner radius (8), the distance (22) between two adjacent periphery modules (12, 13, 14) is minimized.

4. Transporting apparatus (1) according to at least one of the preceding claims, **characterized in that** the guide element (17) of a periphery module (13) is dimensioned such that mutually facing edges (28, 29) of the guide elements (17) of adjacent periphery modules (12, 14) are in contact when the transporting belt (4) is travelling along a curve.

5. Transporting apparatus (1) according to at least one of the preceding claims, **characterized in that** the extent (27) of the positioning surface (18) in the conveying direction (5) corresponds at least to the distance (37) between the axes of rotation (31) of two adjacent rolling elements (19) in the conveying direction (5).

6. Transporting apparatus (1) according to at least one of the preceding claims, **characterized in that** the guide element (17) has an inner side (36), which butts against the periphery module (13) and, when the transporting belt (4) is travelling along a curve, also butts against at least one adjacent periphery module (12, 14).

7. Transporting apparatus (1) according to at least one of the preceding claims, **characterized in that** the guide element (17) is arranged in a releaseable manner on the periphery module (12, 13, 14).

8. Transporting apparatus (1) according to at least one of the preceding claims, **characterized in that** the guide element (17) has a connecting means (26).

9. Transporting apparatus (1) according to Claim 8, **characterized in that** a recess (25) for accommodating the connecting means (26) is present in the periphery module (12, 13, 14).

10. Transporting apparatus (1) according to at least one of the preceding claims, **characterized in that** the guide element (17) is mounted in a rotationally secure manner on the periphery module (12, 13, 14).

11. Transporting apparatus (1) according to at least one of Claims 8 to 10, **characterized in that** the connecting means (26) comprises a resilient hook (33).

12. Transporting apparatus (1) according to at least one of the preceding claims, **characterized in that** the guide element (17) is arranged in an eyelet (20) of the periphery module (12, 13, 14).

13. Transporting apparatus (1) according to at least one of the preceding claims, **characterized in that** the guide element (17) has a through-passage (35), which is oriented in particular essentially orthogonally in relation to the positioning surface (18).

## Revendications

1. Dispositif de transport (1) avec un logement (2, 3) comprenant un guide transversal (6) et avec une bande transporteuse (4) disposée par rapport au logement (2, 3) de manière déplaçable sur le logement (2, 3), laquelle comprend au moins deux modules de bord adjacents (12, 13, 14), qui sont disposés l'un derrière l'autre dans la direction de transport (5) de la bande transporteuse (4), chaque module de bord (12, 13, 14) présentant une surface latérale (16) au niveau de laquelle est disposé un élément de guidage (17) avec une surface d'appui (18) pour l'appui contre le guide transversal (6) constitué d'une pluralité d'éléments roulants (19) et présentant un rayon intérieur (8) d'une courbe, **caractérisé en ce que** la géométrie et/ou les dimensions de l'élément de guidage (17) sont choisies en fonction du rayon intérieur (8) du guide transversal (6), par le fait que les arêtes (28, 29) tournées l'une vers l'autre des éléments de guidage (17) de modules de bord adjacents (12, 13, 14) sont au moins en partie inclinées par rapport aux axes de rotation (31) des éléments roulants (19), les éléments de guidage (17) présentant la forme d'un losange, d'une flèche ou d'un arc ou présentant au niveau de leurs arêtes (28, 29) une autre structure dentée avec des éléments à rainure et languette.

2. Dispositif de transport (1) selon la revendication 1, **caractérisé en ce que** la surface d'appui (18) est courbée.

3. Dispositif de transport (1) selon les revendications 1 ou 2, **caractérisé en ce que** l'étendue (27) de l'élément de guidage (17) dans la direction de transport (5) est choisie de telle sorte que dans le cas d'un déplacement en courbe de la bande de transport (4) en particulier au niveau du rayon intérieur (8), la distance (22) de deux modules de bord adjacents (12, 13, 14) soit minimisée.

4. Dispositif de transport (1) selon au moins l'une quelconque des revendications précédentes, **caractérisé en ce que** l'élément de guidage (17) d'un module de bord (13) est dimensionné de telle sorte que des arêtes (28, 29) tournées l'une vers l'autre des éléments de guidage (17) de modules de bord adjacents (12, 14) soient en contact dans le cas d'un déplacement en courbe de la bande de transport (4).

5. Dispositif de transport (1) selon au moins l'une quelconque des revendications précédentes, **caractérisé en ce que** l'étendue (27) de la surface d'appui (18) dans la direction de transport (5) correspond au moins à la simple distance (37) des axes de rotation (31) de deux éléments roulants adjacents (19) dans la direction de transport (5).

6. Dispositif de transport (1) selon au moins l'une quelconque des revendications précédentes, **caractérisé en ce que** l'élément de guidage (17) présente un côté intérieur (36) s'appliquant contre le module de bord (13), lequel s'applique également contre au moins un module de bord adjacent (12, 14) dans le cas d'un déplacement en courbe de la bande de transport (4).

7. Dispositif de transport (1) selon au moins l'une quelconque des revendications précédentes, **caractérisé en ce que** l'élément de guidage (17) est disposé de manière amovible au niveau du module de bord (12, 13, 14).

8. Dispositif de transport (1) selon au moins l'une quelconque des revendications précédentes, **caractérisé en ce que** l'élément de guidage (17) présente un moyen de connexion (26).

9. Dispositif de transport (1) selon la revendication 8, **caractérisé en ce qu'**un évidement (25) est prévu dans le module de bord (12, 13, 14) pour recevoir le moyen de connexion (26).

10. Dispositif de transport (1) selon au moins l'une quelconque des revendications précédentes, **caractérisé en ce que** l'élément de guidage (17) est supporté de manière fixée en rotation au niveau du module de bord (12, 13, 14).

11. Dispositif de transport (1) selon au moins l'une quelconque des revendications 8 à 10, **caractérisé en ce que** le moyen de connexion (26) comprend un crochet élastique (33).

12. Dispositif de transport (1) selon au moins l'une quelconque des revendications précédentes, **caractérisé en ce que** l'élément de guidage (17) est disposé dans un oeillet (20) du module de bord (12, 13, 14).

13. Dispositif de transport (1) selon au moins l'une quelconque des revendications précédentes, **caractérisé en ce que** l'élément de guidage (17) présente un orifice (35) qui est orienté notamment essentiellement perpendiculairement à la surface d'appui (18).
